# EUROPEAN PATENT SPECIFICATION

(11) **EP 2 221 206 B1**
(45) Date of publication and mention of the grant of the patent: **05.12.2018**
(21) Application number: 10151543.5
(22) Date of filing: 25.01.2010
(51) Int. Cl.: B62J 6/00, B62J 17/02, B62J 35/00

(54) **Scooter type vehicle**
Rollerartiges Fahrzeug
Véhicule de type scooter

(30) Priority: 19.02.2009 JP 2009036381; 02.09.2009 JP 2009202640
(43) Date of publication of application: 25.08.2010
(73) Proprietor: Yamaha Hatsudoki Kabushiki Kaisha, Shizuoka-ken Shizuoka 438-8501 (JP)
(72) Inventor: Mochizuki, Kan, Iwata-shi, Shizuoka-ken 438-8501 (JP)
(74) Representative: Zimmermann, Tankred Klaus

(56) References cited:
- EP-A1- 1 245 481
- EP-A1- 1 990 264
- EP-A2- 1 457 413
- FR-A- 1 121 318
- FR-A1- 2 732 302
- JP-A- 7 069 263
- JP-A- 62 020 775
- JP-A- 2003 237 663
- US-A1- 2007 025 114

## Description

The present invention relates to a scooter type vehicle.

A scooter type vehicle includes a seat, a foot board and a rear cover portion. The foot board is disposed underneath the front of the seat, whereas the rear cover portion extends upward from the front end of the foot board. The foot board is a member on which a rider puts his/her feet during driving of the vehicle. A space, formed between the seat and the rear cover portion, is used for positioning rider's legs.

Additionally, a front cover portion and a front wheel are disposed in a front section of the vehicle, and a front fender is disposed over the front wheel for preventing mud. The front cover portion is provided with a headlight and a pair of flashers. Furthermore, the front fender is provided separately from the front cover portion. The front fender is movable with the front wheel (see Patent Document 1).

On the other hand, the scooter type vehicle is provided with an oil filler for supplying fuel thereto. The oil filler includes an oil filler opening and a cap for opening/closing the oil filler opening. In some conventional scooter type vehicles, the oil filler is provided in the rear cover portion (see Patent Document 2).

(Patent Document 1) Laid-open Japan Patent Publication No. 2005-119571
(Patent Document 2) Laid-open Japan Patent Publication No. 2003-246287

EP 1 457 413 A2, which is considered as the closest prior art, describes a motorcycle having a unit-swing-type power unit swingably supported at its front portion by a vehicle frame, said motorcycle comprising at least a vehicle-body-side shaft supported on the side of said vehicle frame, an engine-side shaft supported on said unit-swing-type power unit, and an engine-side suspension linkage for linking said at least one vehicle-body-side shaft and said engine-side shaft.

An object of the present invention is to provide a scooter type vehicle for compactly forming the structure of the front section of the vehicle, facilitating fuel supply, and largely ensuring a space for positioning rider's legs.

This object is achieved by a scooter type vehicle according to claim 1.

A scooter type vehicle according to the present invention includes a frame, a front fork, a front wheel, a seat, a cover, a front fender, a headlight, a pair of flashers and an oil filler. The frame includes a head pipe portion, a front frame portion and a rear frame portion. The front frame portion extends downward from the head pipe portion. The rear frame portion extends rearward from a lower portion of the front frame portion. The front fork is rotatably supported by the head pipe portion. The front wheel is supported by the lower end of the front fork, while it is disposed in front of the front frame portion. The seat is disposed above the rear frame portion. The cover includes a foot board, a rear cover portion and a front cover portion. The foot board is disposed underneath the front of the seat. The rear cover portion extends upward from the front portion of the foot board, and covers the back of the front frame portion. The front cover portion is disposed over the front wheel, and covers the fronts of the front frame portion and the head pipe portion. The front fender is provided separately from the front cover portion, and covers the top of the front wheel. The front fender is movable with the front wheel. The headlight is provided in the front cover portion, while it is positioned in the transverse center of the vehicle. The flashers are provided in the front cover portion, while they are disposed in positions spaced from the transverse center of the vehicle to the rightward and the leftward, respectively. The oil filler includes an oil filler opening and a cap for opening/closing the oil filler opening. The oil filler is provided in the rear cover portion. The front end of the upper surface of the cap is disposed in a position spaced from the transverse center of the vehicle either to the leftward or the rightward, and is also disposed in a position vertically spaced from the flashers, when the cap closes the oil filler opening.

According to the scooter type vehicle, both of the headlight and the flashers are provided in the front cover portion. Additionally, the front fender and the front cover portion are separately formed as discrete members. The structure of the front section of the vehicle can be thereby compactly formed.

Furthermore, the oil filler is provided in the rear cover portion. Accordingly, fuel can be easily supplied to the vehicle.

Moreover, the front end of the upper surface of the cap is disposed in a position spaced from the flashers in a longitudinal direction of the vehicle in the condition that the cap closes the oil filler opening. Accordingly, the oil filler can be inhibited from interfering with a space for installing the flashers. Consequently, the oil filler can be disposed as forward as possible, and a space for positioning rider's legs can be largely ensured.

According to the scooter type vehicle of the present invention, the structure of the front section of the vehicle can be compactly formed, and oil can be easily supplied to the vehicle. Simultaneously, a space for positioning rider's legs can be largely ensured.

### [Brief Explanation of the Drawings]

Figure 1 is a side view of a scooter type vehicle.
Figure 2 is a front view of the scooter type vehicle.
Figure 3 is a cross-sectional view of the scooter type vehicle illustrated in FIG. 1, which is sectioned along III-III.
Figure 4 is a cross-sectional view of the scooter type vehicle illustrated in FIG. 1, which is sectioned along IV-IV.
Figure 5 is a diagram for illustrating an oil filler that is seen from the back of a rear cover portion.
Figure 6 is a diagram for illustrating an internal configuration of a vicinity of the oil filler.
Figure 7 is a diagram for illustrating a positional relation among a headlight, flashers and a filler cap.
Figure 8 is a diagram for illustrating a positional relation among the headlight, the flashers and the filler cap.
Figure 9 is a side view of a scooter type vehicle according to a second not claimed example.

### <First Embodiment>

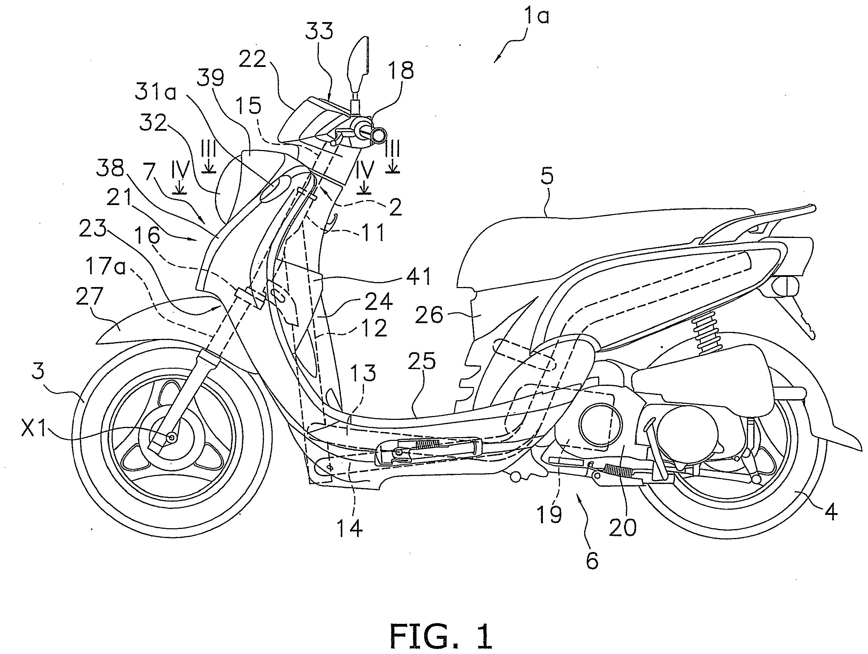

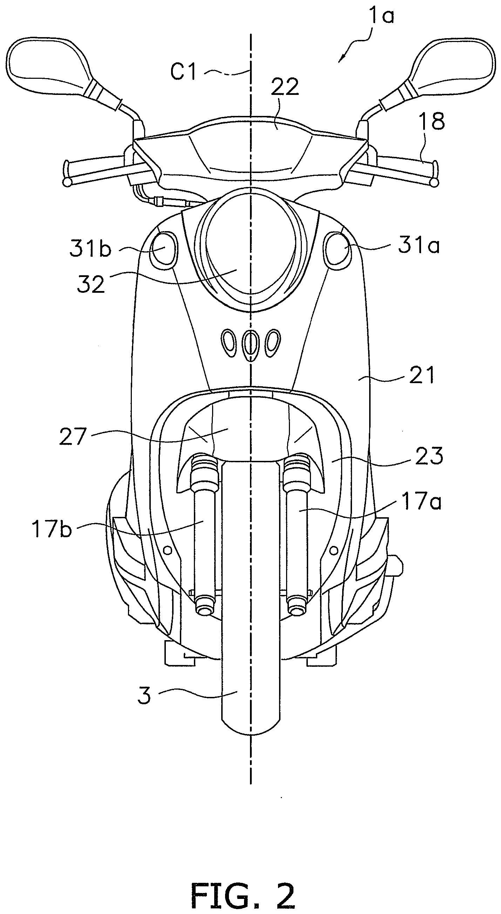

Figures 1 and 2 illustrate a scooter type vehicle 1a according to a first embodiment of the present invention. Figure 1 is a side view of the scooter type vehicle 1a, whereas FIG. 2 is a front view thereof. The scooter type vehicle 1a includes a frame 2, a front wheel 3, a rear frame 4, a seat 5, a power unit 6, a cover 7 and a front fender 27. Note in the following explanation, the term "front" means a travel direction of the vehicle, whereas the term "rear" means an opposite direction to the travel direction of the vehicle. Furthermore, the term "right" means a right direction in the condition that the vehicle is directed to the travel direction of the vehicle, whereas the term "left" means a left direction in the condition that the vehicle is directed to the travel direction of the vehicle.

The frame 2 includes a head pipe portion 11, a front frame portion 12 and a pair of right and left rear frame portions 14, 13.

The head pipe portion 11 is disposed at a slant, and its lower end is accordingly positioned forward of its upper end. A steering shaft 15 is inserted into the head pipe portion 11. The steering shaft is thereby rotatably supported by the head pipe portion 11. An under bracket 16 is coupled to the lower end of the steering shaft 15. The under bracket 16 rotates with the steering shaft 1. The under bracket 16 is disposed in front of the front frame portion 12. Front forks 17a, 17b are attached to the under bracket 16. The front wheel 3 is rotatably supported by an axis provided in the lower ends of the front forks 17a, 17b. Additionally, a handle 18 is fixed to the upper end of the steering shaft 15.

The front frame portion 12 is coupled to the head pipe portion 11, and extends downward from the head pipe portion 11. More specifically, the front frame portion 12 is disposed at a slightly slant angle. Its lower end is thereby positioned rearward of its upper end. Additionally, the front frame portion 12 downwardly extends from the head pipe portion 11 in an obliquely-rearward direction. The front wheel 3 is disposed in front of the front frame portion 12.

The rear frame portions 13, 14 are coupled to the lower end portion of the front frame portion 12. The rear frame portions 13, 14 rearwadly extend from the lower end portion of the front frame portion 12 in an obliquely-upward direction. The rear frame portions 13, 14 herein pass through the beneath of a foot board 25. The rear frame portion 13 is disposed on a left-half section of the vehicle, whereas the rear frame portion 14 is disposed on a right-half section of the vehicle. In FIG. 1, the front end of the rear frame portion 13 is connected to the front frame portion 12 in a higher position than the front end of the rear frame portion 14. However, the front end of the rear frame portion 13 and the front end of the rear frame portion 14 may be connected to the front frame portion 12 at the same height. Alternatively, the front end of the rear frame portion 13 may be connected to the front frame portion 12 in a lower position than the front end of the rear frame portion 14. Furthermore, the front frame portion 12 and the rear frame portions 13, 14 may be separately formed as discrete members or may be continuously (i.e., integrally) formed. Also, the seat 5 is disposed over the rear portions of the rear frame portions 13, 14, as illustrated in FIG. 1.

The power unit 6 is supported by the rear frame portions 13, 14. The power unit 6 includes an engine 19 and a transmission device 20 for transmitting power of the engine 19 to the rear wheel 4. The rear wheel 4 is rotatably supported by a shaft provided in the rear end of the transmission device 20.

The cover 7 is a resin member for covering the vehicle body. The cover 7 includes a front cover portion 21, an inner fender 23, a rear cover portion 24, the foot board 25, a side cover portion 26 and the like.

The front cover portion 21 is disposed over the front wheel 3. The front cover portion 21 covers the front of the head pipe portion 11 and that of the front frame portion 12. The front cover portion 21 is composed of a combination of a plurality of separate components including e.g., a main body part 38 and a headlight cover part 39. The front cover portion 21 is compactly formed in a longitudinal direction of the vehicle. The front end of the front cover portion 21 is disposed rearward of a rotation center X1 of the front wheel 3. Additionally, a headlight 32 and a pair of left and right flashers 31a, 31b are attached to the front cover portion 21.

As illustrated in FIG. 2, the headlight 32 is disposed in the transverse center of the vehicle. In FIG. 2, a dashed dotted line C1 indicates a transverse center line of the front cover portion 21. The head pipe portion 11 and the steering shaft 15 are disposed along the center line C1 in a front view of the vehicle. Additionally, the headlight 32 is provided in the upper portion of the front cover portion 21. The headlight 32 is positioned in front of the upper end of the head pipe portion 11. In the present embodiment, the center line C1 passes through the transverse center of the front wheel 3. When the front cover 21 is formed in a bilaterally symmetric shape, however, a line passing through the transverse center of the front cover portion 21 may be set as the center line. Alternatively, a line passing through the transverse center of the head pipe portion 11 may be set as the center line.

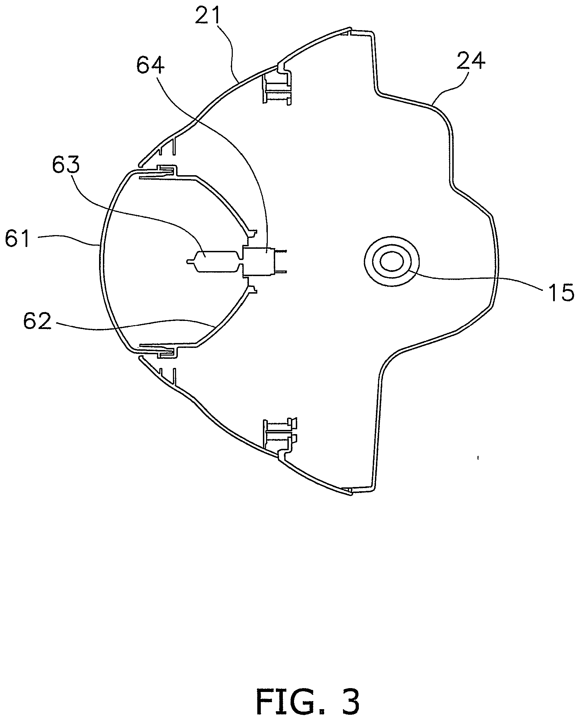

FIG. 3 is a cross-sectional view of a horizontal surface, which passes through a headlight bulb 63 of the headlight 32. As illustrated in FIG. 3, the headlight 32 is positioned in front of the steering shaft 15. The headlight 32 includes a headlight lens 61, a headlight housing 62, the headlight bulb 63 and a headlight socket 64. The headlight lens 61 is made of transparent material such as resin. The headlight lens 61 is provided in the front cover portion 21 so that it is exposed to the outside. The headlight housing 62 is disposed behind the headlight lens 61. The headlight housing 62 is accommodated in an inner space formed between the front cover portion 21 and the rear cover portion 24. The headlight bulb 63 is accommodated in the headlight housing 62. The headlight bulb 63 is inserted into the headlight socket 64. The headlight socket 64 is attached to the headlight housing 62, and protrudes rearward therefrom. A harness (not illustrated in the figure) is connected to the headlight socket 64.

As illustrated in FIGS. 1 and 2, the flashers 31a, 31b are provided in the front cover portion 21. The flashers 31a, 31b are disposed in positions spaced from the transverse center of the vehicle to the leftward and the rightward, respectively. The flashers 31a, 31b are disposed in the upper portion of the front cover portion 21. The headlight 32 is positioned between the flashers 31a, 31b. As illustrated in the front view of the vehicle of FIG. 2, the headlight 32 and the flashers 31a, 31b are thereby disposed side by side in the transverse direction of the vehicle.

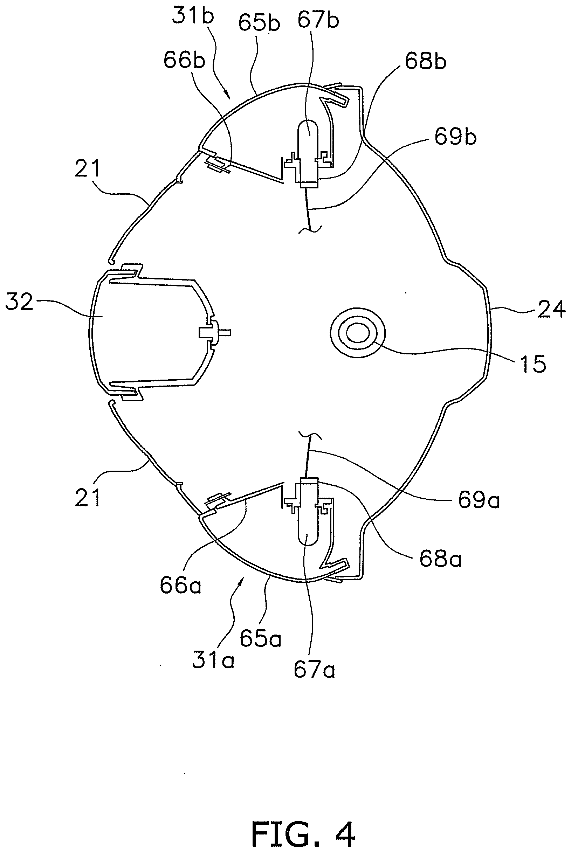

Figure 4 is a cross-sectional view of a horizontal surface, which passes through flasher bulbs 67a, 67b of the flashers 31a, 31b. As illustrated in FIG. 4, the flasher 31a includes a flasher lens 65a, a flasher housing 66a, the flasher bulb 67a and a flasher socket 68a. The flasher lens 65a is made of transparent material such as resin. The flasher lens 65a is provided in the front cover portion 21 so that it is exposed to the outside. The flasher housing 66a is disposed behind the flasher lens 65a. The flasher housing 66a is accommodated in an inner space formed between the front cover portion 21 and the rear cover portion 24. The flasher bulb 67a is accommodated in the flasher housing 66a. The flasher bulb 67a is inserted into the flasher socket 68a. The flasher socket 68a is attached to the flasher housing 66a. The flasher socket 68a protrudes from the flasher housing 66a to a transversely-inward direction of the vehicle.

The flasher 31b includes a flasher lens 65b, a flasher housing 66b, the flasher bulb 67b and a flasher socket 68b. The flasher lens 65b, the flasher housing 66b, the flasher bulb 67b and the flasher socket 68b are provided in bilaterally symmetrical positions to the components of the flasher 31b, i.e., the flasher lens 65a, the flasher housing 66a, the flasher bulb 67a and the flasher socket 68a, respectively. Note a harness 69a is connected to the flasher socket 68a, and a harness 69b is connected to the flasher socket 68b.

A handle cover 22 is disposed over the front cover portion 21, and covers the handle 18. A meter panel 33, including e.g., a fuel gauge and a speed meter, is disposed on the upper surface of the handle cover 22.

The inner fender 23 is disposed under the front cover portion 21. The inner fender 23 is disposed behind the front wheel 3, and covers the back of the front wheel 3.

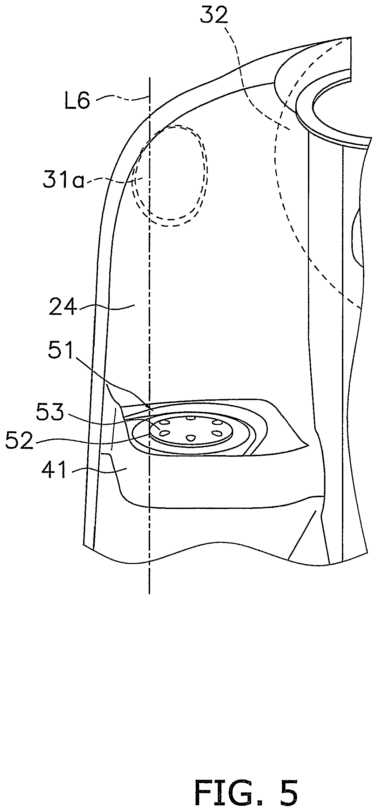

The rear cover portion 24 is disposed behind the front cover portion 21 and the inner fender 23, and covers the back of the head pipe portion 11 and that of the front frame portion 12. The rear cover portion 24 extends upward from the front end of the foot board 25. The transverse center portion of the rear cover portion 24 is formed for backwardly protruding along the head pipe portion 11 and the front frame portion 12. Accordingly, the lower portion of the transversely center portion of the rear cover portion 24 is formed in a slant shape. The lower portion is thus backwardly positioned toward its bottom. Additionally, a vertically intermediate portion of a left portion of the rear cover portion 24 is provided with a first step 41 that protrudes rearward. The first step 41 includes an upper surface, a rear surface and a lateral surface. The rear surface extends downward from the rear end of the upper surface. The lateral surface is connected to both of the upper surface and the rear surface, and covers the transversely left side of the vehicle. A right portion of the first step 41 is connected to the aforementioned center portion of the rear cover portion 24. As illustrated in FIG. 5, an oil filler 51 to be described is provided on the upper surface of the first step 41. Note FIG. 5 illustrates the first step 41 and the oil filler 51, which are seen from the back of the rear cover portion 24.

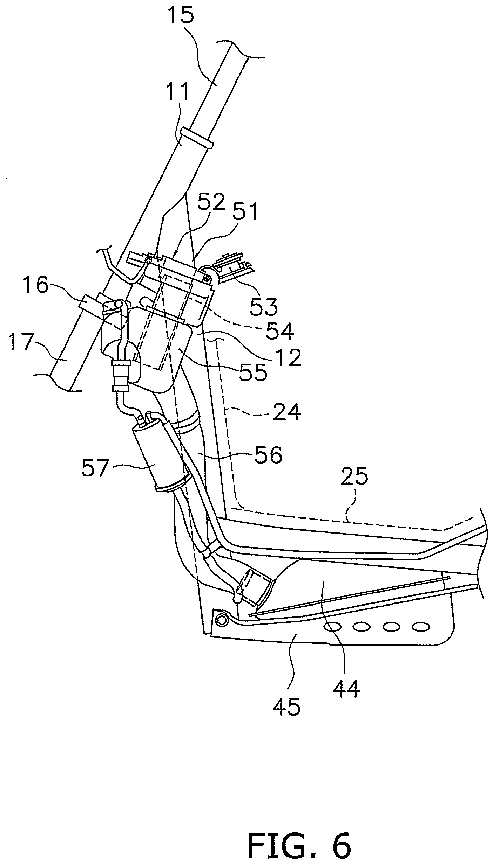

The foot board 25 is a part on which a rider puts his/her feet. The foot board 25 is disposed between the front wheel 3 and the rear wheel 4. The foot board 25 is disposed beneath the front of the seat 5. The front end of the foot board 25 is connected to the lower portion of the rear cover portion 24. The rear portion of the foot board 25 is formed in a U-shape in a top view of the vehicle. The rear portion of the foot board 25 is connected to the lower portion of the side cover portion 26. As illustrated in FIG. 6, a fuel tank 44 for storing fuel is disposed under the foot board 25. Additionally, a tank guard 45 is attached under the fuel tank 44 in order to protect the fuel tank 44.

The side cover portion 26, illustrated in FIG. 1, is disposed rearward of the foot board 25, and encloses a space positioned beneath the seat 5.

The front fender 27 is disposed over the front wheel 3, and covers the top of the front wheel 3. The front fender 27 has a mudguard function of inhibiting mud, splashed by the front wheel 3, from flying to the vehicle body. The front fender 27 is provided separately from the front cover portion 21. The front fender 27 is attached to the under bracket 16. Accordingly, the front fender 27 is movable with the front wheel 3 when the handle 18 is operated.

The oil filler 51 is provided in the rear cover portion 24. In the first step 41, the oil filler 51 is exposed to the outside. As illustrated in FIG. 6, the oil filler 51 includes an oil filler opening 52 and an oil filler cap 53. Fuel is supplied to the fuel tank 44 through the oil filler opening 52. The oil filler cap 53 opens/closes the oil filler opening 52. The oil filler opening 52 communicates with a filler tube 54 that is provided in the interior of the oil filler 51. The oil filler opening 52 is disposed on the left side of the front frame portion 12. The oil filler opening 52 overlaps with the front frame portion 12 in a side view of the vehicle. The filler tube 54 is inserted into a sub-tank 55 that is disposed under the oil filler 51. The filler tube 54 and the sub-tank 55 are accommodated in an inner space surrounded by the front cover portion 21, the inner fender 23 and the rear cover portion 24.

The sub-tank 55 and the fuel tank 44 are connected through a fuel pipe 56 that is made of flexible material such as rubber. Auxiliary devices (e.g., a canister 57) are disposed below the sub-tank 55 for recovering volatile fuel existing in the fuel tank 44. Furthermore, the sub-tank 55 and a breather tube (not illustrated in the figure) of the fuel tank 44 are connected through a breather hose (not illustrated in the figure). A variety of components, including e.g., the fuel pipe 56, the canister 57 and the breather hose, are disposed on the left lateral side of the front frame portion 12. The components are accommodated in an inner space surrounded by the front cover portion 21, the inner fender 23 and the rear cover portion 24. Alternatively, the sub-tank 55 may not be provided, and the filler tube 54 and the fuel tank 44 may be connected through the fuel pipe 56.

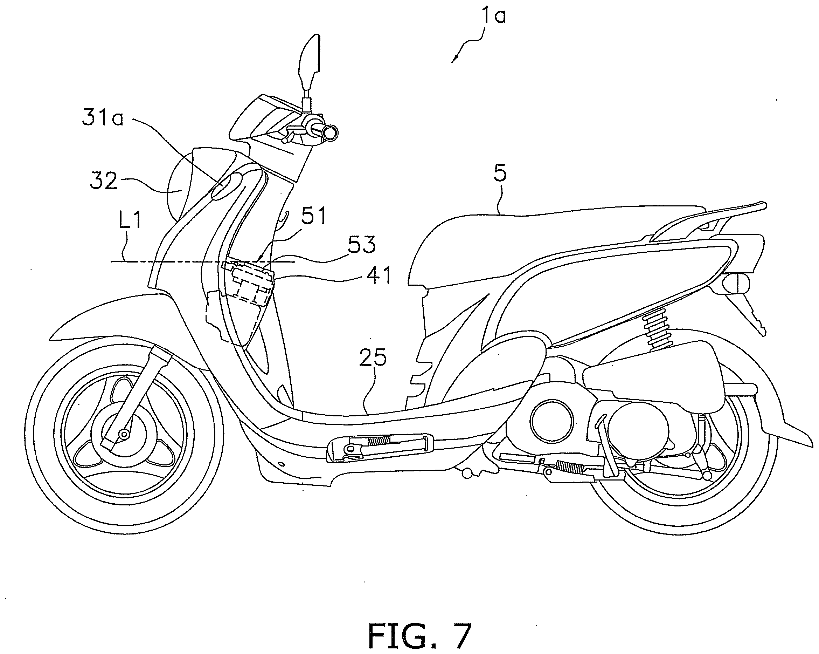

The aforementioned oil filler cap 53 is disposed separately from the transverse center of the vehicle in the condition that the filler cap 53 closes the oil filler opening 52. Additionally, the entire oil filler cap 53, including the front end of the upper surface of the oil filler cap 53, is disposed in a position downwardly spaced from the flashers 31a, 31b, as illustrated in FIG. 7. Thus, the oil filler cap 53 is disposed below the headlight 32 and the flashers 31a, 31b. Note a dashed two-dotted line L1 in FIG. 7 indicates height of the front end of the upper surface of the oil filler cap 53.

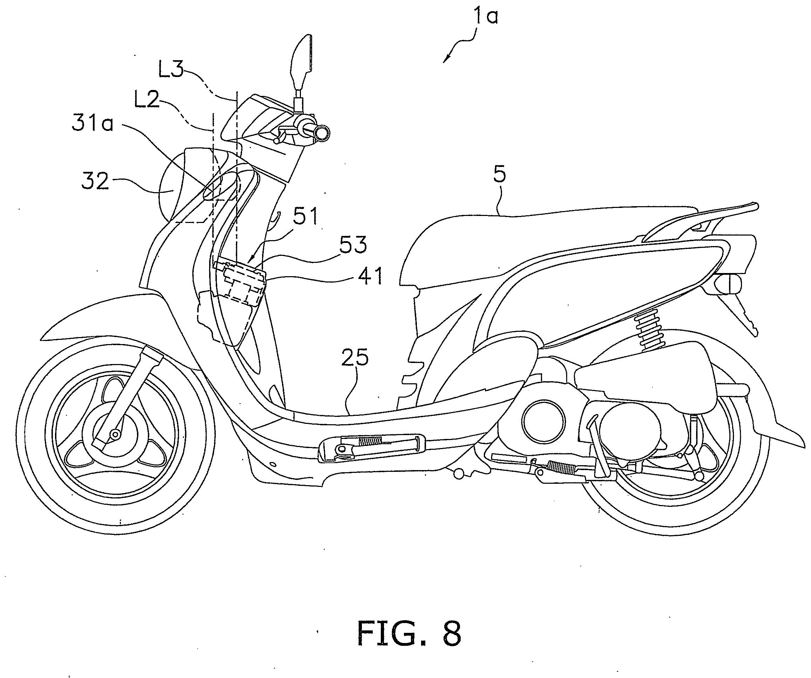

Additionally, as illustrated in FIG. 8, a line L2, which is perpendicular to the ground and passes through the front end of the oil filler 51 in a side view of the vehicle, overlaps with the flashers 31a, 31b. In addition, a line L3, which is perpendicular to the ground and passes through the front end of the upper surface of the oil filler cap 53 in a side view of the vehicle, overlaps with the flashers 31a, 31b.

As illustrated in FIG. 5, the flasher 31a and the oil filler 51 are disposed for overlapping with each other in the transverse direction of the vehicle. In other words, the flasher 31a is disposed over the oil filler 51 in a front view of the vehicle. Furthermore, the flasher 31a is, namely, disposed within an area between transverse ends of the oil filler opening 52. Also, a transversely inner end of the flasher 31a is disposed in a position overlapping with a line that passes through a transversely outer end of the oil filler cap 53 (see a dashed two-dotted line L6).

In the scooter type vehicle 1a, the front fender 27 is separately formed from the cover 7, and is also movable with the front wheel 3. Accordingly, the front fender 27 can be disposed in a closer position to the front wheel 3 than that of a vehicle provided with a fixed fender. Therefore, the front fender 27 can be compactly formed while a mud guard function can be ensured.

Additionally, the front fender 27 is separately formed form the cover 7, and a mudguard function is therein ensured. Accordingly, the cover 7 is not required to have a mudguard function. Therefore, it is not necessary to increase the longitudinal dimension of the cover 7 (especially, the front cover portion 21) in order to ensure a mudguard function.

In the scooter type vehicle 1a, both of the headlight 32 and the flashers 31a, 31b are provided in the front cover portion 21. Accordingly, the handle cover 22 can be further compactly formed than that of a type of vehicle in which a headlight and flashers are disposed in the handle cover 22 that covers the handle 18. Additionally, the handle cover 22 can be removed from the vehicle. In this case, the front section of the vehicle can be compactly formed.

When the oil filler is disposed in the rear cover portion to boost convenience, the space for positioning rider' s legs may be reduced depending on a position of the oil filler. Otherwise, the entire vehicle size may be increased. According to the scooter type vehicle 1a, however, the front end of the upper surface of the oil filler cap 53 is separately disposed from the flashers 31a, 31b in the vertical direction of the vehicle. Therefore, the front cover portion 21 and the rear cover portion 24 can be closely disposed to each other. Accordingly, the front section of the vehicle can be prevented from being increased. Furthermore, the space for positioning rider's legs can be largely ensured by disposing the oil filler 51 as forward as possible.

Moreover, the front end of the upper surface of the oil filler cap 53 is disposed in a position overlapping with the flasher 31a in the vertical direction in a side view of the vehicle. Therefore, the longitudinal width of the vehicle can be reduced. Furthermore, the oil filler cap 53 is disposed in a position overlapping with the flasher 31a in the vertical direction when it is seen in the transverse direction of the vehicle. Therefore, the transverse width of the vehicle can be reduced.

### <Second not claimed example>

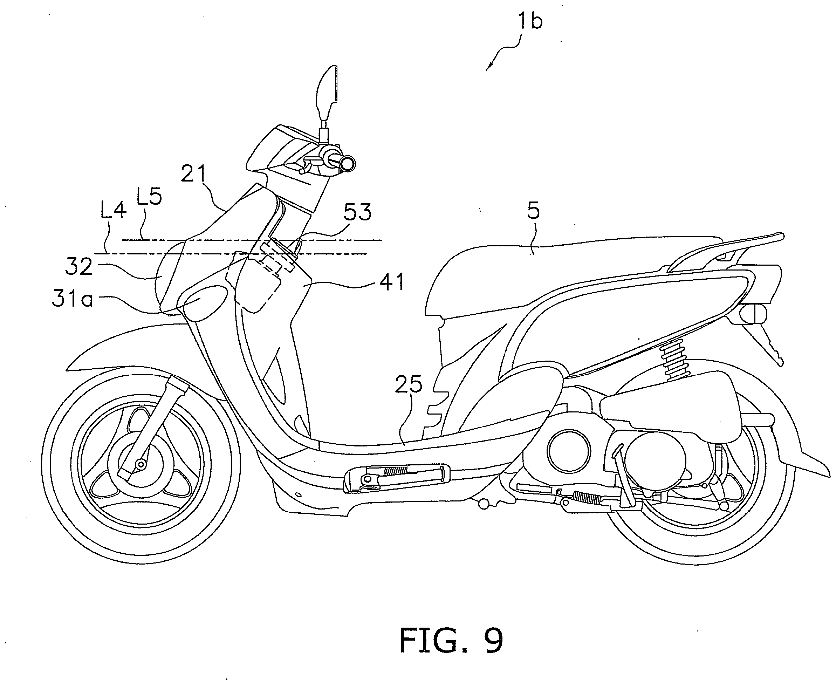

Figure 9 illustrates a side view of a scooter type vehicle 1b according to a second embodiment of the present invention. In the scooter type vehicle 1b, the headlight 32 is disposed in the transverse center of the front cover portion 21. More specifically, it is disposed in the vicinity of the lower end of the transverse center of the front cover portion 21. Additionally, the flashers 31a, 31b are also provided in the front cover portion 21. The flashers 31a, 31b are disposed side by side at roughly the same height as the headlight 32. In this case, the upper ends of the flashers 31a, 31b are positioned lower than the upper end of the headlight 32. Figure 9 illustrates only the flasher 31a, but the flasher 31b is disposed in a bilaterally symmetrical position to the flasher 31a.

The front end of the upper surface of the oil filler cap 53 is positioned higher than the flashers 31a, 31b in the condition that the oil filler cap 53 closes the oil filler opening 52 (see a dashed two-dotted line L5). Additionally, the front end of the upper surface of the oil filler cap 53 is positioned slightly higher than the headlight 32. Note the lower end of the upper surface of the oil filler cap 53 is positioned higher than the flashers 31a, 31b, but is positioned lower than the upper end of the headlight 32 (see a dashed two-dotted line L4). The front end of the oil filler cap 53 is also disposed in a position longitudinally spaced from the flashers 31a, 31b and the headlight 32. The front end of the oil filler cap 53 is positioned rearward of the flashers 31a, 31b and the headlight 32.

According to the scooter type vehicle 1b, similar to the scooter type vehicle 1a of the first embodiment, structure of the front section of the vehicle can be compactly formed and fuel can be easily supplied to the vehicle. Simultaneously, the space for positioning rider' s legs can be largely ensured.

### <Other Embodiments>

(a) According to the aforementioned embodiments, the flashers 31a, 31b and the headlight 32 are disposed side by side in the transverse direction of the vehicle when they are seen in a front view of the vehicle. The flashers 31a, 31b may be disposed in positions vertically spaced from the headlight 32. In other words, the flashers 31a, 31b may be disposed in higher or lower positions than the headlight 32.
(b) According to the aforementioned embodiments, the entire oil filler cap 53 is disposed in a position vertically spaced from the flashers 31a, 31b. The entire oil filler cap 53 is also disposed for not overlapping with the flashers 31a, 31b in a front view of the vehicle. However, a portion (e.g., a rear end) of the oil filler cap 53, excluding the front end thereof, may be disposed for overlapping with the flashers 31a, 31b in a front view of the vehicle.
(c) According to the aforementioned second not claimed example, the front end of the upper surface of the oil filler cap 53 is disposed in a higher position than the headlight 32. However, the front end of the upper surface of the oil filler cap 53 may be disposed at the same height as the upper end of the headlight 32. Alternatively, the front end of the upper surface of the oil filler cap 53 may be disposed lower than the upper end of the headlight 32.
(d) The structure of the cover is not limited to the aforementioned embodiment. The front cover portion 21 may be arbitrarily formed as long as it is a portion of the cover 7 that covers both of the head pipe portion 11 and the front frame portion 12 and can be seen from the front. Furthermore, the rear cover portion 24 may be arbitrarily formed as long as it is a portion of the cover 7 that covers both of the head pipe portion 11 and the front frame portion 12 and can be seen from far away (i.e., from the foot board side).
(e) According to the aforementioned embodiments, the front cover portion 21 is composed of a plurality of separate components. However, the front cover portion 21 may be composed of a single integrally-formed component. Similarly, the rear cover portion 24 may be composed of a plurality of discrete components, or may be composed of a single integrally-formed component.
(f) According to the aforementioned embodiments, the front cover portion 21 and the rear cover portion 24 are separately formed. However, the present invention is not limited to the configuration. For example, the structure of the cover may be different from that of the aforementioned embodiments.
(g) According to the aforementioned embodiments, the frame 2 is composed of discrete components, that is, the head pipe portion 11, the front frame portion 12 and the rear frame portion 13. The discrete components are joined by welding. However, the present invention is not limited to this. The structure of the frame may be different from that of the aforementioned embodiments.
(h) A transverse positional relation among the oil filler opening, the filler cap, and the flashers of the present invention is not limited to the aforementioned embodiments. For example, either of the flashers may be disposed within an area between the transverse lateral ends of the oil filler cap, or may be disposed closer to the center of the vehicle than the filler cap.
   (i) The frame is not limited to the aforementioned embodiment. The front frame portion may be arbitrarily formed as long as it extends downward. For example, the front frame portion may extend in a downwardly-rearward direction. Additionally, the front frame portion may not be formed in a linear shape. For example, a portion of the front frame portion may extend from the head pipe portion in a downwardly-rearward direction, and the rest of the front frame portion may extend downward. On the other hand, the rear frame portion may be arbitrarily formed as long as it extends rearward. For example, the rear frame portion may extend in an upwardly-rearward direction, or may backwardly extend in parallel to the ground. Alternatively, the rear frame portion may extend in an upwardly rearward direction.

### [Industrial Applicability]

The present invention has advantageous effects of compactly forming the structure of the front section of the vehicle, facilitating fuel supply to the vehicle, and largely ensuring a space for positioning rider's legs. The present invention is thereby useful as a scooter type vehicle.

## Claims

1. A scooter type vehicle (1a), comprising:
a frame (2) including a head pipe portion (11), a front frame portion (12) and a rear frame portion (13), the front frame portion (12) extending downward from the head pipe portion (11), the rear frame portion (13) extending rearward from a lower portion of the front frame portion (12);
a front fork (17a, 17b) rotatably supported by the head pipe portion (11);
a front wheel (3) supported by a lower end of the front fork (17a, 17b), the front wheel (3) disposed in front of the front frame portion (12);
a seat (5) disposed above the rear frame portion (13);
a cover (7) including a foot board (25), a rear cover portion (24) and a front cover portion (21), the foot board (25) disposed underneath a front of the seat (5), the rear cover portion (24) extending upward from a front portion of the foot board (25) and covering the back of the front frame portion (12), the front cover portion (21) disposed over the front wheel (3) and covering fronts of the front frame portion (12) and the head pipe portion (11);
a front fender (27) separately provided from the front cover portion (21), the front fender (27) covering a top of the front wheel (3) and being movable with the front wheel (3);
a headlight (32) provided in the front cover portion (21), the headlight (32) positioned in a transverse center of the vehicle (1a);
a pair of flashers (31a, 31b) provided in the front cover portion (21), the flashers (31a, 31b) disposed in positions spaced from the transverse center of the vehicle (1a) to the rightward and the leftward, respectively; and
an oil filler (51) provided in the rear cover portion (24), the oil filler (51) including an oil filler opening (52) and an oil filler cap (53) for opening/closing the oil filler opening (52),
wherein a front end of an upper surface of the oil filler cap (53) is disposed in a position spaced from the transverse center of the vehicle (1a) either to the rightward or the leftward while it is disposed in a position vertically spaced from the flashers (31a, 31b) when the oil filler cap (53) closes the oil filler opening (52),
wherein a line (L2), which is perpendicular to the ground and passes through the front end of the oil filler (51) in a side view of the vehicle (la), overlaps with the flashers (31a, 31b),
wherein a line (L3), which is perpendicular to the ground and passes through the front end of the upper surface of the oil filler cap (53) in a side view of the vehicle (la), overlaps with the flashers (31a, 31b),
wherein the oil filler cap (53) is disposed for transversely overlapping with one of the flashers (31a, 31b) when the oil filler cap (53) closes the oil filler opening (52).

2. The scooter type vehicle (1a) according to claim 1, wherein the front end of the upper surface of the oil filler cap (53) is disposed in a lower position than the flashers (31a, 31b) when the oil filler cap (53) closes the oil filler opening (52).

3. The scooter type vehicle (1a) according to claim 2, wherein the front end of the upper surface of the oil filler cap (53) is disposed in a lower position than the headlight (32) and the flashers (31a, 31b) when the oil filler cap (53) closes the oil filler opening (52).

4. The scooter type vehicle (1a) according to claim 1, wherein the front end of the upper surface of the oil filler cap (53) is disposed in a higher position than the flashers (31a, 31b) when the oil filler cap (53) closes the oil filler opening (52).

5. The scooter type vehicle (1a) according to claim 4, wherein a lower end of the upper surface of the oil filler cap (53) is disposed in a higher position than the flashers (31a, 31b) and in a lower position than an upper end of the headlight (32) when the oil filler cap (53) closes the oil filler opening (52).

6. The scooter type vehicle (1a) according to claim 1, wherein the front end of the upper surface of the oil filler cap (53) is disposed for vertically overlapping with the flashers (31a, 31b) in a side view of the vehicle (1a) when the oil filler cap (53) closes the oil filler opening (52).

## Patentansprüche

1. Ein Fahrzeug vom Rollertyp (1a), das folgende Merkmale aufweist:
einen Rahmen (2), der einen Kopfrohrabschnitt (11), einen vorderen Rahmenabschnitt (12) und einen rückseitigen Rahmenabschnitt (13) umfasst, wobei der vordere Rahmenabschnitt (12) sich von dem Kopfrohrabschnitt (11) nach unten erstreckt, wobei der rückseitige Rahmenabschnitt (13) sich von einem unteren Abschnitt des vorderen Rahmenabschnitts (12) nach hinten erstreckt;
eine Vorderradgabel (17a, 17b), die drehbar durch den Kopfrohrabschnitt (11) getragen ist;
ein Vorderrad (3), das durch ein unteres Ende der Vorderradgabel (17a, 17b) getragen ist, wobei das Vorderrad (3) vor dem vorderen Rahmenabschnitt (12) angeordnet ist;
einen Sitz (5), der über dem rückseitigen Rahmenabschnitt (13) angeordnet ist;
eine Abdeckung (7), die ein Trittbrett (25), einen rückseitigen Abdeckungsabschnitt (24) und einen vorderen Abdeckungsabschnitt (21) umfasst, wobei das Trittbrett (25) unterhalb einer Vorderseite des Sitzes (5) angeordnet ist, wobei der rückseitige Abdeckungsabschnitt (24) sich von einem vorderen Abschnitt des Trittbretts (25) nach oben erstreckt und die Rückseite des vorderen Rahmenabschnitts (12) bedeckt, wobei der vordere Abdeckungsabschnitt (21) über dem Vorderrad (3) angeordnet ist und Vorderseiten des vorderen Rahmenabschnitts (12) und des Kopfrohrabschnitts (11) bedeckt;
einen vorderen Kotflügel (27), der separat von dem vorderen Abdeckungsabschnitt (21) bereitgestellt ist, wobei der vordere Kotflügel (27) eine Oberseite des Vorderrads (3) bedeckt und mit dem Vorderrad (3) bewegt werden kann;
einen Scheinwerfer (32), der in dem vorderen Abdeckungsabschnitt (21) bereitgestellt ist, wobei der Scheinwerfer (32) in einer transversalen Mitte des Fahrzeugs (1a) positioniert ist;
ein Paar Blinklichter (31a, 31b), die in dem vorderen Abdeckungsabschnitt (21) bereitgestellt sind, wobei die Blinklichter (31a, 31b) in Positionen angeordnet sind, die von der transversalen Mitte des Fahrzeugs (1a) nach rechts beziehungsweise nach links beabstandet sind; und
eine Öleinfüllvorrichtung (51), die in dem rückseitigen Abdeckungsabschnitt (24) bereitgestellt ist, wobei die Öleinfüllvorrichtung (51) eine Öleinfüllöffnung (52) und einen Öleinfüllverschluss (53) zum Öffnen/Schließen der Öleinfüllöffnung (52) umfasst,
wobei ein vorderes Ende einer oberen Oberfläche des Öleinfüllverschlusses (53) in einer Position angeordnet ist, die von der transversalen Mitte des Fahrzeugs (1a) entweder nach rechts oder nach links beabstandet ist, während es in einer Position angeordnet ist, die vertikal von den Blinklichtern (31a, 31b) beabstandet ist, wenn der Öleinfüllverschluss (53) die Öleinfüllöffnung (52) schließt,
wobei eine Linie (L2), die in einer Seitenansicht des Fahrzeugs (1a) senkrecht zum Boden ist und durch das vordere Ende der Öleinfüllvorrichtung (51) verläuft, mit den Blinklichtern (31a, 31b) überlappt,
wobei eine Linie (L3), die in einer Seitenansicht des Fahrzeugs (1a) senkrecht zum Boden ist und durch das vordere Ende der oberen Oberfläche des Öleinfüllverschlusses (53) verläuft, mit den Blinklichtern (31a, 31b) überlappt,
wobei der Öleinfüllverschluss (53) zum transversalen Überlappen mit einem der Blinklichter (31a, 31b) angeordnet ist, wenn der Öleinfüllverschluss (53) die Öleinfüllöffnung (52) schließt.

2. Das Fahrzeug vom Rollertyp (1a) gemäß Anspruch 1, bei dem das vordere Ende der oberen Oberfläche des Öleinfüllverschlusses (53) in einer tieferen Position als die Blinklichter (31a, 31b) angeordnet ist, wenn der Öleinfüllverschluss (53) die Öleinfüllöffnung (52) schließt.

3. Das Fahrzeug vom Rollertyp (1a) gemäß Anspruch 2, bei dem das vordere Ende der oberen Oberfläche des Öleinfüllverschlusses (53) in einer tieferen Position als der Scheinwerfer (32) und die Blinklichter (31a, 31b) angeordnet ist, wenn der Öleinfüllverschluss (53) die Öleinfüllöffnung (52) schließt.

4. Das Fahrzeug vom Rollertyp (1a) gemäß Anspruch 1, bei dem das vordere Ende der oberen Oberfläche des Öleinfüllverschlusses (53) in einer höheren Position als die Blinklichter (31a, 31b) angeordnet ist, wenn der Öleinfüllverschluss (53) die Öleinfüllöffnung (52) schließt.

5. Das Fahrzeug vom Rollertyp (1a) gemäß Anspruch 4, bei dem ein unteres Ende der oberen Oberfläche des Öleinfüllverschlusses (53) in einer höheren Position als die Blinklichter (31a, 31b) und in einer tieferen Position als ein oberes Ende des Scheinwerfers (32) angeordnet ist, wenn der Öleinfüllverschluss (53) die Öleinfüllöffnung (52) schließt.

6. Das Fahrzeug vom Rollertyp (1a) gemäß Anspruch 1, bei dem das vordere Ende der oberen Oberfläche des Öleinfüllverschlusses (53) in einer Seitenansicht des Fahrzeugs (1a) zum vertikalen Überlappen mit den Blinklichtern (31a, 31b) angeordnet ist, wenn der Öleinfüllverschluss (53) die Öleinfüllöffnung (52) schließt.

## Revendications

1. Véhicule de type scooter (la), comprenant:
un châssis (2) comportant une partie de tuyau de tête (11), une partie de châssis avant (12) et une partie de châssis arrière (13), la partie de châssis avant (12) s'étendant vers le bas depuis la partie de tuyau de tête (11), la partie de châssis arrière (13) s'étendant vers l'arrière à partir d'une partie inférieure de la partie de châssis avant (12);
une fourche avant (17a, 17b) supportée de manière rotative par la partie de tuyau de tête (11);
une roue avant (3) supportée par une extrémité inférieure de la fourche avant (17a, 17b), la roue avant (3) étant disposée devant la partie de châssis avant (12);
un siège (5) disposé au-dessus de la partie de châssis arrière (13);
un couvercle (7) comportant un marchepied (25), une partie de couvercle arrière (24) et une partie de couvercle avant (21), le marchepied (25) étant disposé au-dessous d'une partie avant du siège (5), la partie de couvercle arrière (24) s'étendant vers le haut à partir d'une partie avant du marchepied (25) et couvrant l'arrière de la partie de châssis avant (12), la partie de couvercle avant (21) étant disposée au-dessus de la roue avant (3) et couvrant des parties avant de la partie de châssis avant (12) et la partie de tuyau de tête (11);
un garde-boue avant (27) prévu séparément de la partie de couvercle avant (21), le garde-boue avant (27) couvrant une partie supérieure de la roue avant (3) et pouvant se déplacer avec la roue avant (3);
un phare (32) prévu dans la partie de couvercle avant (21), le phare (32) étant positionné dans un centre transversal du véhicule (la);
une paire de clignotants (31a, 31b) prévus dans la partie de couvercle avant (21), les clignotants (31a, 31b) étant disposés à des positions espacées du centre transversal du véhicule (1a) respectivement vers la droite et vers la gauche; et
un moyen de remplissage d'huile (51) prévu dans la partie de couvercle arrière (24), le moyen de remplissage d'huile (51) comportant une ouverture de moyen de remplissage d'huile (52) et un capuchon de moyen de remplissage d'huile (53) destiné à ouvrir/fermer l'ouverture de moyen de remplissage d'huile (52),
dans lequel une extrémité avant d'une surface supérieure du capuchon de moyen de remplissage d'huile (53) est disposée en une position espacée du centre transversal du véhicule (1a) soit vers la droite, soit vers la gauche, tandis qu'elle est disposée en une position espacée verticalement des clignotants (31a, 31b) lorsque le capuchon de moyen de remplissage d'huile (53) ferme l'ouverture de moyen de remplissage d'huile (52),
dans lequel une ligne (L2), qui est perpendiculaire au sol et passe par l'extrémité avant du moyen de remplissage d'huile (51) dans une vue latérale du véhicule (la), vient en recouvrement avec les clignotants (31a, 31b),
dans lequel une ligne (L3), qui est perpendiculaire au sol et passe par l'extrémité avant de la surface supérieure du capuchon de moyen de remplissage d'huile (53) dans une vue latérale du véhicule (la), vient en recouvrement avec les clignotants (31a, 31b),
dans lequel le capuchon de moyen de remplissage d'huile (53) est disposé de manière à venir transversalement en recouvrement avec un des clignotants (31a, 31b) lorsque le capuchon de moyen de remplissage d'huile (53) ferme l'ouverture de moyen de remplissage d'huile (52).

2. Véhicule de type scooter (1a) selon la revendication 1, dans lequel l'extrémité avant de la surface supérieure du capuchon de moyen de remplissage d'huile (53) est disposée en une position plus haute que clignotants (31a, 31b) lorsque le capuchon de moyen remplissage d'huile (53) ferme l'ouverture de moyen de remplissage d'huile (52).

3. Véhicule du type scooter (1a) selon la revendication 2, dans lequel l'extrémité avant de la surface supérieure du capuchon de moyen de remplissage d'huile (53) est disposée en une position plus basse que le phare (32) et les clignotants (31a, 31b) lorsque le capuchon de moyen de remplissage d'huile (53) ferme l'ouverture de moyen de remplissage d'huile (52).

4. Véhicule de type scooter (1a) selon la revendication 1, dans lequel l'extrémité avant de la surface supérieure du capuchon de moyen de remplissage d'huile (53) est disposée en une position plus haute que les clignotants (31a, 31b) lorsque le capuchon de moyen de remplissage d'huile (53) ferme l'ouverture de moyen de remplissage d'huile (52).

5. Véhicule de type scooter (1a) selon la revendication 4, dans lequel une extrémité inférieure de la surface supérieure du capuchon de moyen de remplissage d'huile (53) est disposée en une position plus haute que les clignotants (31a, 31b) et en une position plus basse qu'une extrémité supérieure du phare (32) lorsque le capuchon de moyen de remplissage d'huile (53) ferme l'ouverture de moyen de remplissage d'huile (52).

6. Véhicule de type scooter (1a) selon la revendication 1, dans lequel l'extrémité avant de la surface supérieure du capuchon de moyen de remplissage d'huile (53) est disposée de manière à venir verticalement en recouvrement avec les clignotants (31a, 31b) dans une vue latérale du véhicule (1a) lorsque le capuchon de moyen de remplissage d'huile (53) ferme l'ouverture de moyen de remplissage d'huile (52).
